# EUROPEAN PATENT SPECIFICATION

(11) **EP 0 794 080 B1**
(45) Date of publication and mention of the grant of the patent: **04.09.2002**
(21) Application number: 96308979.2
(22) Date of filing: 11.12.1996
(51) Int. Cl.: B60K 28/16

(54) **Vehicle traction control with throttle position limit**
Fahrzeug-Antischlupf-Regelsystem mit Stellungsbegrenzung für Drosselklappen
Système anti-patinage pour véhicules avec limitation de déplacement du papillon

(30) Priority: 05.03.1996 US 610919
(43) Date of publication of application: 10.09.1997
(73) Proprietor: Ford Motor Company, Dearborn, MI 48126 (US)
(72) Inventor: Tran, Minh Ngoc, Dearborn, Michigan 48124 (US); Hrovat, Davorin David, Dearborn, Michigan 48124 (US); Simonds, Craig John, Dearborn, Michigan 48124 (US); Yester, John Loring, Bloomfield, Michigan 48301 (US)
(74) Representative: Messulam, Alec Moses

(56) References cited:
- DE-A- 3 924 582
- DE-A- 4 136 018
- US-A- 5 018 595

## Description

This invention relates to a method to control the driving wheels of a vehicle having an internal combustion engine.

Traction control of various types is known. For example, it is known to reduce the power applied to the driving wheels through various combinations of controlling engine operating parameters such as spark advance, fuel injection, and throttle control. Braking may also be used to control driving wheel rotation.

United States Patent No. 5018595 discloses a traction control system for a vehicle having an internal combustion engine, the system including means for limiting the rotation of a throttle of the internal combustion engine to less than a predetermined throttle position. The block diagram on figure 1 of the drawings accompanying this patent shows that a limit drive torque is calculated when slip is detected and that from this maximum drive torque a limit throttle angle is derived and taken into account for controlling the engine.

It discloses a method of controlling traction in a vehicle having an internal combustion engine, an associated transmission with first gear, and associated driving wheels, including among others the step of determining if a first spin of the driving wheels has not taken place; and limiting rotational position of the throttle as a function of vehicle speed possibly after successful checking that a first spin of the driving wheels has not taken place (see figure 4, step 105).

Even though such control of the driving wheels is known, there still is a need to improve the performance of traction control in various operating environments. Conditions such as low and medium speed operations on combined, split ice/snow surfaces are addressed, in part, by this invention.

According to the present invention we provide a method of controlling traction in a vehicle having an internal combustion engine, an associated transmission with first gear, and associated driving wheels, including the steps of: determining if there is a low ambient temperature; establishing a predetermined vehicle speed; determining if the vehicle speed is less than a predetermined vehicle speed; determining if the first gear is in operation; determining if a first spin of the driving wheels has not yet taken place; and limiting rotational position of the throttle as a function of vehicle speed and axes weight after the successful checking of the above conditions relating to ambient temperature, the vehicle speed, the first gear and the first spin in order to reduce the first spin on slippery roads while securing good acceleration on dry roads.

This invention limits the rotation of a throttle of an internal combustion engine at very low vehicle speeds, such as below 6 or 7 miles per hour. Such throttle rotation, or throttle angle, is not limited at higher speeds. Thus, one has improved traction control without sacrificing dry road performance. The advantage of such a system is to provide improved traction control, for example, up to about 30 percent, using shorter and smaller first wheel spin at low vehicle speeds.

The invention will now be described, by way of example, with reference to the accompanying drawings, in which:
Fig. 1 is a graphic representation of time versus wheel speed showing a first spin wheel flair improvement using a part throttle traction control system versus a traction control system without a throttle limiter; and
Fig. 2 is a logic flow diagram in accordance with an embodiment with this invention.

To reduce the initial wheel spins at standing starts or at very low vehicle speeds on slippery surfaces, it is proposed to use a traction control (TC) system to limit the throttle rotation to a throttle position less than wide open throttle (WOT) at these conditions. Typical implementation can use a full electronic throttle, a series throttle, or similar configuration. It is important that this limit is such that it in no way reduces the vehicle performance (e.g. 0-60 mph times) on dry roads. Indeed, since it can also limit the wheel spins on dry roads, this can improve the dry road performance as was the case with powerful F1 and dragster racing vehicles where the main advantage of the traction control (TC) systems occurred around the starting positions.

Typically, testing is used to establish a predetermined maximum throttle opening assuming dry road surface and normal vehicle operating conditions.

Furthermore, such traction control system limit throttle rotation may be activated only at lower ambient temperatures. This may be indicated by an outside air sensor, by engine coolant temperature (ECT), or by some other indication at the start of operations characteristic of icy/snowy road conditions. Also, if desired, the vehicle TC system can be turned off. In such a case, the above limiter would be eliminated re-creating the possibility of aggressive acceleration causing wheel spins (even occasionally on dry roads).

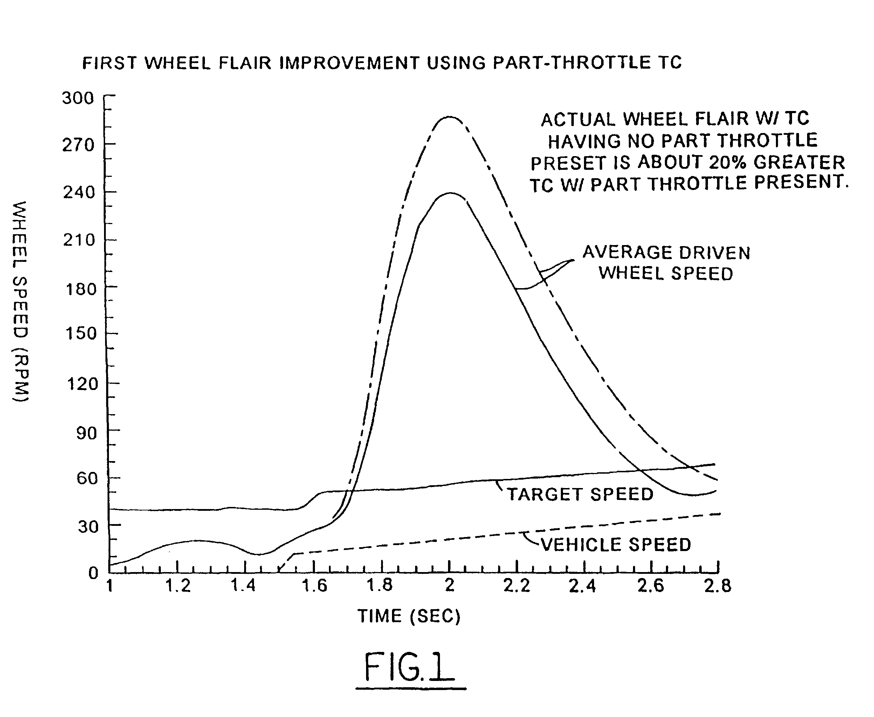

Referring to Fig. 1, a graphical presentation of simulation results of a comparison between traction control with and without a throttle limiter in accordance with an embodiment of this invention. In Fig. 1, the solid line is the data with the throttle limiting control in accordance with an embodiment of this invention and the dashed line is without throttle limiting control in accordance with an embodiment of this invention. Note that operation indicated by the solid line, between about 1.7 seconds and 2.8 seconds, produces less real speed or spin but that the corresponding vehicle speed is eventually higher than without the throttle limiter.

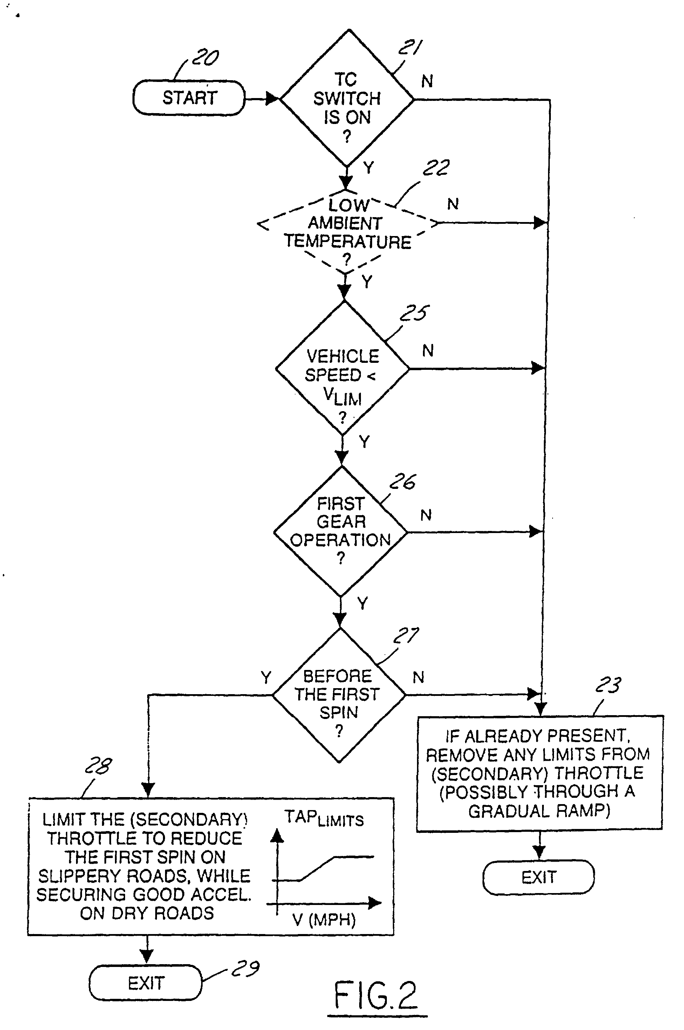

Referring to Fig. 2, a logic flow diagram starts at block 20 and then goes to a decision block 21 wherein it is asked if the traction control system is switched on. If the traction control system is switched on, logic flow goes to a decision block 22. If the traction control system is not switched on, logic flow goes to a block 23 wherein there are removed any limits from the secondary throttle and then logic flow goes to a block 24 which exits from the logic flow. At logic block 22 it is asked if there is a low ambient temperature. If no, logic flow goes to block 23. If yes, logic flow goes to a decision block 25 wherein it is asked if vehicle speed is less than a limiting vehicle speed. If no, logic flow goes to block 23. If yes, logic flow goes to a decision block 26 wherein it is asked if the first gear is in operation. If no, logic flow goes to block 23. If yes, logic flow goes to a block 27 wherein it is asked if this is before the first spin. That is, are we in the state preceding the first spin of either wheel? If no, logic flow goes to block 23. If yes, logic goes to a block 28. At block 28 a limit is applied to the secondary throttle to reduce the first spin on slippery roads while securing good acceleration on dry roads. Such limiting of the rotational position of the throttle can be a function of vehicle speed and axes weight. Logic flow from block 28 goes to a block 29 which exits the logic flows process and flow. Inside block 28 is a graphic representation of velocity in miles per hour versus throttle angle position limits.

## Claims

1. A method of controlling traction in a vehicle having an internal combustion engine, an associated transmission with first gear, and associated driving wheels, including the steps of:
determining (22) if there is a low ambient temperature;
establishing a predetermined vehicle speed;
determining (25) if the vehicle speed is less than a predetermined vehicle speed;
determining (26) if the first gear is in operation;
determining (27) if a first spin of the driving wheels has not yet taken place; and
limiting rotational position of the throttle (28) as a function of vehicle speed and axes weight after the successful checking of the above conditions relating to ambient temperature (22), the vehicle speed (25), the first gear (26) and the first spin (27) in order to reduce the first spin on slippery roads while securing good acceleration on dry roads.

2. A method as claimed in claim 1, wherein the step of limiting rotational position of the throttle (28) includes using a secondary throttle.

3. A method as claimed in either claim 1 or claim 2, further including the step of removing any previously applied limits to throttle operation, such as throttle position rotation, when any of the following steps occur:
not detecting a low ambience temperature;
not detecting a vehicle speed less than the predetermined vehicle speed; and
not detecting operation in first gear.

## Patentansprüche

1. Verfahren zur Antriebsregelung in einem Fahrzeug mit einer Brennkraftmaschine, einem zugehörigen Getriebe mit einem ersten Gang, und mit zugehörigen Antriebsrädern, folgende Schritte beinhaltend:
Bestimmen (22), ob die Umgebungstemperatur tief liegt;
Erstellen einer vorgegebenen Fahrzeuggeschwindigkeit;
Bestimmen (25), ob die Fahrzeuggeschwindigkeit kleiner als eine vorgegebene Fahrzeuggeschwindigkeit ist;
Bestimmen (26), ob der erste Gang in Betrieb ist;
Bestimmen (27), ob ein erstes Durchdrehen der Räder noch nicht aufgetreten ist; und
Begrenzen der Drehstellung der Drosselklappe (28) als Funktion der Fahrzeuggeschwindigkeit und der Achslast nach der erfolgreichen Prüfung der obengenannten Bedingungen bezüglich der Umgebungstemperatur (22), der Fahrzeuggeschwindigkeit (25), des ersten Ganges (26) und des ersten Durchdrehens (27), so daß das erste Durchdrehen auf rutschigen Fahrbahnen reduziert wird, während eine gute Beschleunigung auf trockenen Fahrbahnen gewährleistet wird.

2. Verfahren nach Anspruch 1, worin der Schritt der Begrenzung der Drehstellung der Drosselklappe (28) die Benutzung einer Sekundärdrosselklappe beinhaltet.

3. Verfahren nach Anspruch 1 oder Anspruch 2, außerdem den Schritt beinhaltend, daß alle zuvor angebrachten Begrenzungen des Drosselklappenbetriebes aufgehoben werden, wie z.B. die Drosselklappendrehstellung, wenn ein beliebiger der folgenden Punkte auftritt:
keine Erfassung einer tiefen Außentemperatur;
keine Erfassung einer Fahrzeuggeschwindigkeit kleiner als die vorgegebene Fahrzeuggeschwindigkeit; und
keine Erfassung eines Betriebes im ersten Gang.

## Revendications

1. Procédé de commande de traction dans un véhicule comportant un moteur à combustion interne, une transmission associée comprenant un premier rapport de réduction, et des roues motrices associées, comprenant les étapes consistant à :
déterminer (22) s'il existe une température ambiante faible,
établir une vitesse de véhicule prédéterminée,
déterminer (25) si la vitesse du véhicule est inférieure à une vitesse de véhicule prédéterminée,
déterminer (26) si le premier rapport de réduction est en fonctionnement,
déterminer (27) si un premier patinage des roues motrices n'a pas encore eu lieu, et
limiter la position de rotation du papillon des gaz (28) en fonction de la vitesse du véhicule et du poids des essieux après la commande réussie des conditions ci-dessus concernant la température ambiante (22), la vitesse du véhicule (25), le premier rapport de réduction (26) et le premier patinage (27) de manière à réduire le premier patinage sur des routes glissantes tout en assurant une bonne accélération sur des routes sèches.

2. Procédé selon la revendication 1, dans lequel l'étape consistant à limiter la position de rotation du papillon des gaz (28) comprend l'utilisation d'un papillon des gaz secondaire.

3. Procédé selon soit la revendication 1, soit la revendication 2, comprenant en outre l'étape consistant à éliminer l'une quelconque des limites précédemment appliquées au fonctionnement du papillon des gaz, telle qu'une rotation de position du papillon des gaz, lorsque l'une quelconque des étapes suivantes se produit :
la non détection d'une faible température ambiante,
la non détection d'une vitesse du véhicule inférieure à la vitesse prédéterminée du véhicule, et
la non détection du fonctionnement dans le premier rapport de réduction.
